Europäisches Patentamt

European Patent Office

Office européen des brevets

(19)

(11) Veröffentlichungsnummer: **0 235 350 B1**

## (12) EUROPÄISCHE PATENTSCHRIFT

(45) Veröffentlichungstag der Patentschrift: **15.07.92**

(51) Int. Cl.5: **H02B 1/04**, B60R 16/00

(21) Anmeldenummer: **86112370.1**

(22) Anmeldetag: **06.09.86**

(54) **Schalter, insbesondere für Kraftfahrzeuge.**

(30) Priorität: **17.09.85 DE 3533055**

(43) Veröffentlichungstag der Anmeldung:
**09.09.87 Patentblatt 87/37**

(45) Bekanntmachung des Hinweises auf die
Patenterteilung:
**15.07.92 Patentblatt 92/29**

(84) Benannte Vertragsstaaten:
**FR GB IT**

(56) Entgegenhaltungen:
**DE-A- 2 816 450**
**FR-A- 1 558 202**
**FR-A- 2 389 214**

(73) Patentinhaber: **SWF Auto-Electric GmbH**
**Stuttgarter Strasse 119 Postfach 135**
**W-7120 Bietigheim-Bissingen(DE)**

(72) Erfinder: **Spazierer, Hubert**
**Posener Strasse 41**
**W-7120 Bietigheim-Bissingen(DE)**
Erfinder: **Weber, Adam**
**Frimleystrasse 12**
**W-7120 Bietigheim-Bissingen(DE)**

## Beschreibung

Die Erfindung betrifft einen Schalter gemäß den Merkmalen des Oberbegriffs des Anspruchs 1.

Bei Schaltern an Kraftfahrzeugen, die in eine Montageplatte, beispielsweise das Armaturenbrett, eingesteckt werden sollen, haben sich rastbare Befestigungen durchgesetzt. So ist aus der DE-PS 32 28 931 ein Schalter bekannt, der an zwei Seitenwänden befestigte Rastfedern besitzt, die bei eingestecktem Gehäuse hinter die Montageplatte schnappen und dadurch den Schalter an ihr festhalten. Wenn die Rastfedern nicht von der Bodenplatte des Schalters her zugänglich sind, was in der Regel bei einer als Armaturenbrett dienenden Montageplatte an Kraftfahrzeugen ausgeschlossen ist, müssen bei der bisher bekannten Ausführung Öffnungen in die Montageplatte eingelassen sein, durch welche die Rastfedern zugänglich sind, damit der Schalter bei Bedarf aus der Montageplatte gelöst werden kann. Solche Öffnungen in den Montageplatten werden aber von den Fahrzeugherstellern aus herstellungstechnischen und stilistischen Gründen oftmals nicht gewünscht.

Aus der FR-A 2 389 214, insbesondere Figur 2, ist ein elektrischer Schalter bekannt, der zwei Rastfedern aufweist, von denen jede von einer Seitenwand des Schaltergehäuses ausgeht und sich in Richtung auf eine Frontseite des Schaltergehäuses erstreckt. Die Rastfedern sind über eine Rastnase hinaus in Form eines Löseschenkels verlängert, der vor einer Aufnahme endet, in der das Schaltergehäuse steckt. Würde ein solcher Schalter ohne weiteres in das Armaturenbrett eines Kraftfahrzeugs eingebaut, so wäre auf zwei gegenüberliegenden Seiten zwischen dem Rand der Montageöffnung am Armaturenbrett und dem Schaltergehäuse ein Zwischenraum vorhanden, in dem sich jeweils eine Rastfeder mit Löseschenkel befände.

Aufgabe der Erfindung ist es, einen Schalter der eingangs genannten Art zu schaffen, der auf einfache Weise sicher, aber bei Bedarf leicht demontierbar an einer Montageplatte festlegbar ist. Weiterhin sollten der Schalter und die Montageplatte einem Betrachter einen möglichst günstigen Anblick bieten.

Diese Aufgabe wird erfindungsgemäß mit dem kennzeichnenden Teil des Anspruchs 1 gelöst. Da die Rastfeder hier im Bereich der flächenmäßigen Ausdehnung der Frontplatte endet, kann der Schalter über den gesamten Umfang seiner Frontplatte von der Montageplatte umschlossen werden. Ebensowenig braucht das Federelement von der Bodenplatte des Schalters her zugänglich zu sein. Der Schalter kann somit spielfrei und formschön in der Montageplatte festgelegt werden.

Der Schalter bietet dabei einen besonders formschönen Anblick, wenn die in Anspruch 2 und/oder 3 aufgezeigte Maßnahme zur Anwendung kommt. Weiter kann dadurch verhindert werden, daß bei der Bedienung des Schalters ungewollt der Löseschenkel der Rastfeder betätigt wird.

Wenn der Durchbruch in der Montageplatte durch den Schalterbetätigungsknopf abgedeckt wird, wird eine Betätigung der Rastfeder ermöglicht oder erleichert, wenn der Schalterbetätigungsknopf gemäß Anspruch 4 lösbar an seiner Schaltachse befestigt ist. Hier kommen sowohl Schraubbefestigungen zwischen Schalterbetätigungsknopf und Schaltachse in Betracht, als auch Rastbefestigungen. Letztere werden bevorzugt, weil sie im allgemeinen schneller lösbar sind als Schraubbefestigungen. Die Befestigungsmittel für den Schalterbetätigungsknopf sind während des Betriebes des Schalters unsichtbar, wenn sie nur in einer von mehreren Stellungen des Schalterbetätigungsknopfes zugänglich sind, die nur zum Lösen des Schalters aus der Montageplatte eingestellt wird.

Die Handhabung der Rastfeder wird erleichtert, wenn deren Löseschenkel gemäß Anspruch 6 aus der Frontplatte herausragt. Ein solcher Löseschenkel stört den Anblick des Schalters nicht, wenn Anspruch 7 zur Anwendung kommt. Hier ist der Löseschenkel an seinem gesamten, aus der Frontplatte herausragenden Abschnitt rundum von dem Schalterbetätigungsknopf abgedeckt. Das Abdekken des Löseschenkels kann beispielsweise mittels eines rohrförmigen Abschnittes des Schalterbetätigungsknopfes bewerkstelligt werden. Durch die in Anspruch 9 vorgeschlagene versenkte Anordnung des Schalterbetätigungsknopfes in einer Vertiefung der Frontplatte wird vermieden, daß der Schalterbetätigungsknopf unerwünscht weit von der Frontplatte absteht. Wenn sich die Frontplatte dabei vollständig um den rohrförmigen Abschnitt des Schalterbetätigungsknopfes erstreckt, wird vorgeschlagen, den Schalterbetätigungsknopf gemäß Anspruch 13 axial verstellbar auszubilden. In solchen Fällen liegt die Aussparung, durch welche die Befestigungsmittel zwischen Schalterbetätigungsknopf und Schaltachse zugänglich sind, vorzusweise in einer erhöhten axialen Stellung des Schalterbetätigungsknopfes frei. Wenn die Frontplatte gemäß Anspruch 10 den rohrförmigen Abschnitt nicht um seinen gesamten Umfang umgibt, braucht der Schalterbetätigungsknopf nicht unbedingt axial verstellbar zu sein. Es genügt, wenn der Schalterbetätigungsknopf beispielsweise schwenkbar oder verschiebbar gegenüber der Frontplatte gelagert ist. Die Aussparung, durch welche die Befestigungsmittel zwischen Schalterbetätigungsknopf und Schaltachse zugänglich ist, liegt dann in einer bestimmten Schwenkstellung oder Verschiebestellung des Schalterbetätigungsknopfes frei.

Wenn der Schalterbetätigungsknopf lösbar an seiner Schaltachse befestigt ist, kann er besonders leicht abgenommen werden, wenn zwischen ihm und der Schaltachse ein federndes Element gemäß Anspruch 14 angeordnet ist.

Der Schalter kann bei Bedarf besonders enfach aus der Montageplatte entfernt werden, wenn an einer Seitenwand ein Federlappen gemäß Anspruch 16 angeordnet ist. Wenn der Löseschenkel der Rastfeder betätigt wird, drückt der Federlappen den Schalter quasi aus der Öffnung in der Montageplatte heraus.

In den Ansprüchen 15 bis 18 ist noch aufgezeigt, wie im einzelnen eine sichere, spielfreie und formschöne Verbindung zwischen dem Schaltergehäuse und der Montageplatte aussehen kann.

Weitere vorteilhafte Einzelheiten und Ausgestaltungen der Erfindung sind aus den übrigen Unteransprüchen sowie aus der nachfolgend erläuterten Zeichnung ersichtlich, die ein Ausführungsbeispiel zeigt.

Es zeigen:

Fig.1    eine Ansicht auf die Frontplatte eines erfindungsgemäßen Schalters,

Fig.2    eine Schnittansicht entlang der Linie II-II der Fig.1,

Fig.3    eine weitere Schnittansicht durch den Schalter, gegenüber der in Fig. 2 dargestellten Ansicht um 90° verdreht,

Fig.4    eine Ansicht auf die Seitenwand des Schalters und

Fig.5    einen Schnitt entlang der Linie V-V der Fig.4.

Der Schalter stellt einen Lichtschalter für Kraftfahrzeuge dar und besitzt ein Gehäuse 10 mit rechteckigem Querschnitt. Das Gehäuse 10 besitzt ein Oberteil 11 mit einer Frontplatte 12, von welcher sich vier Seitenwände 13,14,15 und 16 sowie eine parallel zur vorderen Seitenwand 13 angeordnete Zwischenwand 17 senkrecht nach unten erstreckt. Etwa auf halber Höhe des Gehäuses 10 ist ein Zwischenstück 18 angeordnet, welches an dem unteren Rand der Seitenwand 14 sowie an dem unteren Rand der Zwischenwand 17 anliegt. Das Gehäuse 10 ist durch eine Bodenplatte 19 abgeschlossen, welche nahe den unteren Rändern der Seitenwände 15 und 16 mit den Seitenwänden 15 und 16 verrastet ist. In die Frontplatte 12 des Gehäuseoberteils 11 ist ein Durchbruch 20 eingelassen. In dem darunter liegenden Bereich des Zwischenstücks 18 ist ebenfalls ein Durchbruch 21 eingelassen. Durch die Durchbrüche 20 und 21 ist eine zylindrische Schaltachse 23 drehbar und axial verschiebbar geführt. Die Schaltachse 23 wird mittels zweier Rastblattfedern 24 und 25 in ihren Schaltstellungen gehalten, welche an zwei Seitenwänden 26 und 27 des Zwischenstücks 18 geführt sind. Mit der Schaltachse 23 ist oberhalb des Zwischenstücks 18 ein Lichtleitkörper 28 drehfest verbunden, welcher eine Glühlampe 29 übergreift, die auf der Bodenplatte 19 des Gehäuses 10 angeordnet ist und das Zwischenstück 18 im Bereich eines Durchbruchs 30 durchdringt. Über den Lichtleitkörper 28 kann von der Schaltachse 23 eine Kontaktbrücke 31 mitgenommen werden, die unterhalb des Zwischenstücks 18 auf einem Kontakttierungsteil 31 a angeordnet ist, das das Zwischenstück 18 im Bereich eines Durchbruches 32 mit einem bolzenartigen Fortsatz 31b durchdringt, an welchem der Lichtleitkörper 28 angreift. Die Kontaktbrücke 31 kann mehrere auf der Bodenplatte 19 angeordnete Kontaktstege beaufschlagen, die mit den Fahrzeuglampen verbunden sind. Weiter ist im Bereich der Bodenplatte 19 ein Potentiometer 33 angeordnet, das mittels einer Schleiffeder 34 betätigt werden kann, die an einem Rändelrad 35 befestigt ist, welches an den Gehäusewänden 13 und 17 drehbar gelagert ist und die Frontplatte 12 im Bereich eines Durchbruches 36 durchdringt. Aus dem oberen Ende der Schaltachse 23 ist ein Federschenkel 37 herausgeschnitten, mittels welchem ein hohler Schalterbetätigungsknopf 38 rastend an der Schaltachse 23 festgelegt ist. Der Federschenkel 37 steht nach unten gerichtet seitlich von der Schaltachse 23 ab und greift in einen Durchbruch 22a ein, welcher in eine im Inneren des Schalterbetätigungsknopfes 38 befindliche Zwischenwand 22 eingelassen ist. Der Schalterbetätigungsknopf 38 stützt sich außerdem über ein als Druckfeder 39 ausgebildetes federndes Element an der Schaltachse 23 ab.

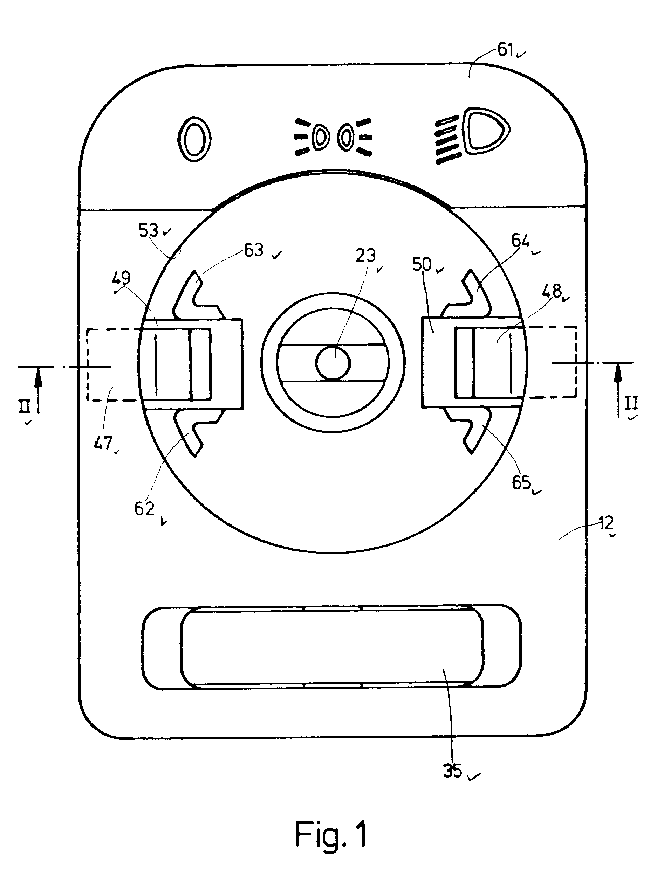

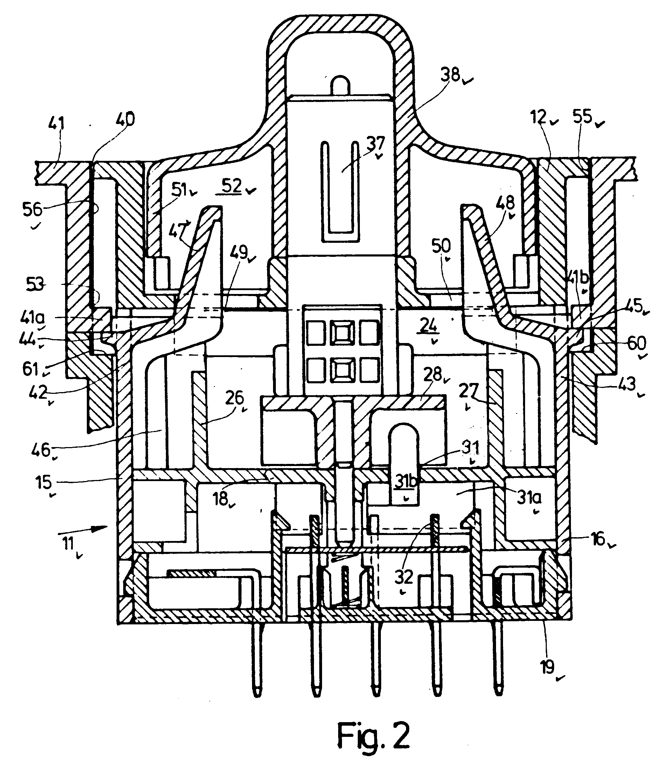

Wie die Fig. 2 zeigt, ist der Schalter in eine Öffnung 40 im Armaturenbrett 41 des Kraftfahrzeuges eingesetzt. Der Schalter wird mittels zweier Rastfedern 42 und 43 in der Öffnung 41 gehalten, die an den Seitenwänden 15 und 16 des Gehäuseoberteils 11 angeformt sind und seitlich von ihnen abstehen. Bei der Schaltermontage schnappen die Rastfedern 42 bzw. 43 mit jeweils einem Ansatz 44 bzw. 45 hinter Ansätze 41a bzw. 41b des Armaturenbretts 41. Von jeder Rastfeder 42 und 43 geht dabei ein in den Gehäuseinnenraum 46 ragender Löseschenkel 47 bzw. 48 aus, der im Bereich eines Durchbruchs 49 bzw. 50 in der Frontplatte 12 endet, wie die Fig. 1 zeigt. Wie die Fig. 2 weiter zeigt, durchdringen die Löseschenkel 47 bzw. 48 der Rastfedern 42 bzw. 43 die Durchbrüche 49 bzw. 50 in der Frontplatte 12 und ragen aus der Frontplatte 12 heraus. Der Schalterbetätigungsknopf 38 besitzt einen zylinderrohrförmigen Abschnitt 51, welcher einen Hohlraum 52 umschließt, in den die Löseschenkel 47 und 48 der Rastfedern 42 und 43 hineinragen.

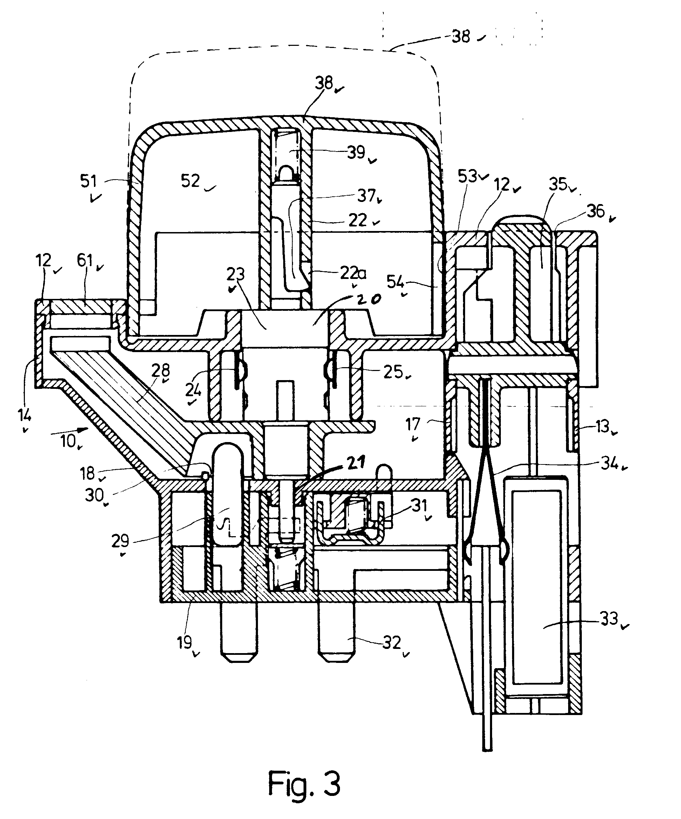

Wie die Fig. 1 bis 3 weiter zeigen, ist der Schalterbetätigungsknopf 38 mit seinem rohrförmigen Abschnitt 51 in einer Vertiefung 53 in der Frontplatte 12 angeordnet. Der rohrförmige Abschnitt 51 liegt mit geringem Spiel auf der Frontplatte 12 auf. Vom unteren Rand des Schalterbetätigungsknopfes 38 her ist eine Aussparung 54 in den rohrförmigen Abschnitt 51 eingelassen, wie die Fig. 3 zeigt. Durch diese Aussparung 54 ist nach dem Ziehen des Schalterbetätigungsknopfes 38 in eine mit gestrichelten Linien angedeutete Stellung der Federschenkel 37 zugänglich, über welchen der Schalterbetätigungsknopf 38 rastend an der Schaltachse 23 festgelegt ist. In die Aussparung 54 kann ein stiftartiges Werkzeug eingeführt werden, mit dem der seitlich von der Schaltachse 23 abstehende Federschenkel 37 zu deren gedachter Achslinie hin gedrückt werden kann. Wenn der Federschenkel 37 eingedrückt ist, drückt die Druckfeder 39 den Schalterbetätigungsknopf 38 von der Schaltachse 23. Jetzt liegen die Löseschenkel 47 und 48 der Rastfedern 42 und 43 frei. Durch Drücken der Löseschenkel 47 und 48 in Richtung der gedachten Achslinie der Schaltachse 23 können die Ansätze 44 und 45 vom Armaturenbrett 41 weg in das Gehäuseinnere 46 bewegt werden. Der Schalter läßt sich nun leicht aus der Öffnung 40 des Armaturenbretts 41 entfernen, indem man ihn an den Löseschenkeln 47 und 48 aus der Öffnung 40 zieht.

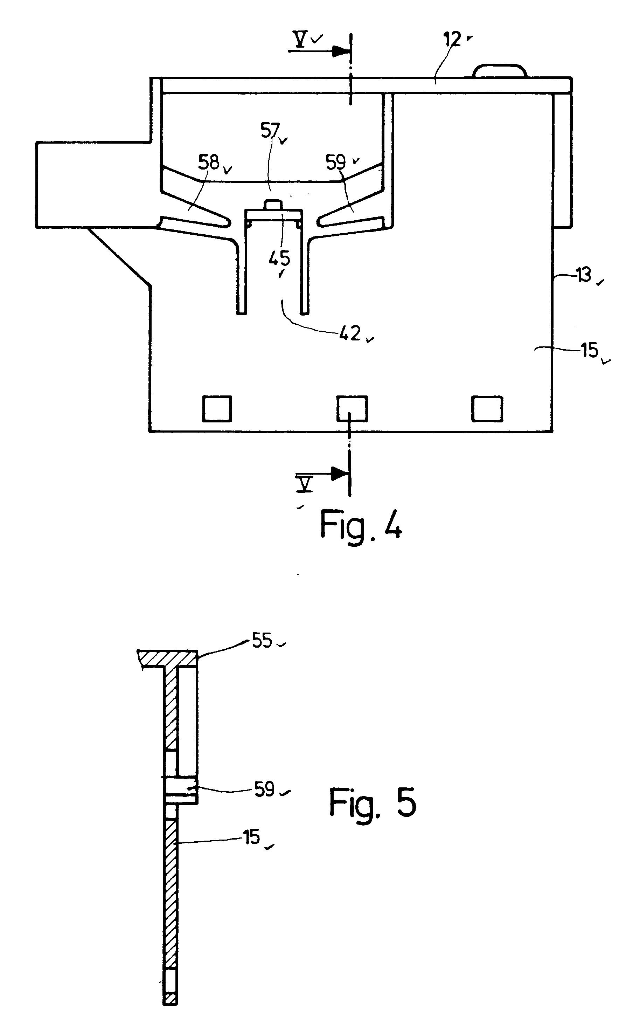

Wie die Fig. 2 zeigt, verläuft die Randkontur 55 der Frontplatte 12 fluchtend mit der Kontur 56 der Öffnung 40 in dem Armaturenbrett 41. Wie die Fig. 4 und 5 zeigen, sind im Bereich eines Durchbruches 57 der Seitenwand 15 zwei Federlappen 58 und 59 angeordnet, welche seitlich und etwa quer zur Längsrichtung der Rastfeder 42 verlaufen und unterhalb des Ansatzes 45 der Rastfeder 42 enden. Die Seitenwand 15 ist im Bereich der Federlappen 58 und 59 so breit, daß sie fluchtend mit der Randkontur 55 der Frontplatte 12 verläuft. Oberhalb und unterhalb sowie seitlich der Federlappen 58 und 59 ist die Seitenwand 15 schmäler ausgebildet. Die Federlappen 58 und 59 sind somit sehr stabil ausgebildet. Wenn der Schalter in der Öffnung 40 des Armaturenbretts 41 eingesetzt ist, liegen die Federlappen 58 und 59 an der aus Fig. 2 ersichtlichen Begrenzungswand 60 der Öffnung 40 unter elastischer Vorspannung an, während der Ansatz 45 der Rastfeder 42 unter elastischer Vorspannung an dem Ansatz 41b des Armaturenbretts 41 anliegt. Die Seitenwände 13 und 16 sind ebenso wie die Seitenwand 15 mit Federlappen versehen (nicht dargestellt). Die Federlappen der Seitenwand 15 liegen an der in der gleichen Ebene wie die Begrenzungswand 60 verlaufenden Begrenzungswand 61 der Öffnung 40 an. Die Federlappen der Seitenwand 13 liegen an einer in der gleichen Ebene wie die Begrenzungswände 60 und 61 verlaufenden, nicht dargestellten Begrenzungswand der Öffnung 40 an. Dadurch ist der Schalter spielfrei in der Öffnung 40 des Armaturenbretts 41 eingespannt. Wenn die Löseschenkel 47 und 48 der Rastfedern 42 und 43 zur gedachten Achse der Schaltachse 23 hin bewegt werden, drücken die Federlappen 58 und 59 den Schalter aus der Öffnung 40.

Wie die Fig. 1 und 3 zeigen, umgibt die Vertiefung 53 der Frontplatte 12 den rohrförmigen Abschnitt 51 des Schalterbetätigungsknopfes 38 nicht um seinen gesamten Umfang, sondern nur über einen Winkelbereich von etwa 270°. In dem übrigen Bereich verläuft die Frontplatte 12 in einer tiefer liegenden Ebene und besitzt eine eingelassene Symbolscheibe 61, welche sich entlang der Oberkante der Seitenwand 14 des rechteckigen Gehäuses 10 erstreckt. Der Schalterbetätigungsknopf 38 ist über einen Winkel von etwa 90° schwenkbar, welcher somit in der Größe der Größe der Ausdehnung des nicht in der Vertiefung 53 liegenden Teils des rohrförmigen Abschnitts 51 entspricht und auf die Größe der Ausdehnung der Symbolscheibe 61 abgestimmt ist. Die Stellungen des Schalterbetätigungsknopfes 38 können somit eindeutig den Symbolen auf der Symbolscheibe 61 zugeordnet werden. Die Schwenkbewegungen des Schalterbetätigungsknopfes 38 werden durch vier Anschläge 62,63,64, und 65 begrenzt, welche seitlich der Durchbrüche 49 und 50 an der Frontplatte 12 angeformt sind. Die Anschläge 62,63,64 und 65 ragen wie die Löseschenkel 47 und 48 der Rastfedern 42 und 43 in den Hohlraum 52 des Schalterbetätigungsknopfes 38 und arbeiten mit nicht dargestellten Innenwänden des Schalterbetätigungsknopfes 38 zusammen. Sie sind somit beim Gebrauch des Schalters unsichtbar.

**Patentansprüche**

1. Schalter, insbesondere für Kraftfahrzeuge, mit einem durch eine Frontplatte (12), mehrere Seitenwände (13, 14, 15, 16) und eine Bodenplatte (19) abgegrenzten Gehäuse (10), das in eine Öffnung (40) einer Montageplatte (41) einsetzbar ist, wobei von wenigstens einer Seitenwand (15, 16) eine zur Frontplatte (12) zeigende Rastfeder (42, 43) SEITLICH ABSTEHT, die bei der Schaltermontage mit einem Ansatz (44, 45) hinter die Montageplatte (41) schnappt und die einen im Bereich der Frontplatte (12) endenden Löseschenkel (47, 48) besitzt, dadurch gekennzeichnet, daß sich der Löseschenkel (47, 48) durch den Gehäuseinnenraum (46) erstreckt und im Bereich eines in der Frontplatte (12) vorgesehenen Durchbruchs (49, 50) endet.

2. Schalter nach Anspruch 1, dadurch gekennzeichnet, daß der Durchbruch (49,50) in der Frontplatte (12) wenigstens aus einer Blickrichtung durch einen Schalterbetätigungsknopf (38) abgedeckt ist.

3. Schalter nach Anspruch 2, dadurch gekennzeichnet, daß der Schalterbetätigungsknopf (38) den Durchbruch (49,50) nur in einer von mehreren Stellungen freigibt.

4. Schalter nach Anspruch 2 oder 3, dadurch gekennzeichnet, daß der Schalterbetätigungsknopf (38) lösbar an seiner Schaltachse (23) befestigt ist.

5. Schalter nach Anspruch 4, dadurch gekennzeichnet, daß der Schalterbetätigungsknopf (38) über Befestigungsmittel (22a,37), insbesondere Rastmittel, lösbar an der Schaltachse (23) befestigt ist und daß diese Befestigungsmittel (22a,37) nur in einer von mehreren Stellungen des Schalterbetätigungsknopfes (38) zugänglich sind.

6. Schalter nach wenigstens einem der vorhergehenden Ansprüche, dadurch gekennzeichnet, daß der Löseschenkel (47,48) der Rastfeder (42,43) den Durchbruch (49,50) in der Frontplatte (12) durchdringt und aus der Frontplatte (12) herausragt.

7. Schalter nach Anspruch 6, dadurch gekennzeichnet, daß der Schalterbetätigungsknopf (38) wenigstens in einer seiner Schaltstellungen mit geringem Spiel auf der Frontplatte (12) aufliegt und daß der Löseschenkel (47,48) in einen Hohlraum (52) des Schalterbetätigungsknopfes (38) hineinragt.

8. Schalter nach Anspruch 7, dadurch gekennzeichnet, daß der Schalterbetätigungsknopf (38) in mehrere Schaltstellungen schwenkbar ist und einen rohrförmigen Abschnitt (51) aufweist, der in den Schaltstellungen den Durchbruch (49,50) und den aus dem Durchbruch (49,50) herausragenden Löseschenkel (47,48) umgibt.

9. Schalter nach Anspruch 5 und 8, dadurch gekennzeichnet, daß die Befestigungsmittel (37) zwischen dem Schalterbetätigungsknopf (38) und der Schaltachse (23) im Bereich des rohrförmigen Abschnitts (51) des Schalterbetätigungsknopfes (38) angeordnet sind, daß der Schalterbetätigungsknopf (38) mit seinem rohrförmigen Abschnitt (51) in einer Vertiefung (53) der Frontplatte (12) angeordnet ist und in seinem rohrförmigen Abschnitt (51) eine Aussparung (54) aufweist, durch die in einer Schaltstellung die Befestigungsmittel (37) zugänglich sind.

10. Schalter nach Anspruch 9, dadurch gekennzeichnet, daß die Vertiefung (53) den rohrförmigen Abschnitt (51) nicht um seinen gesamten Umfang umgibt.

11. Schalter nach Anspruch 10, dadurch gekennzeichnet, daß der Schalterbetätigungsknopf (38) nur um einen Winkel schwenkbar ist, welcher in der Größe auf die Größe der Ausdehnung des nicht bedeckten Teils des rohrförigen Abschnitts (51) abgestimmt ist.

12. Schalter nach Anspruch 11, dadurch gekennzeichnet, daß auf der Frontplatte (12) Anschläge (62,63,64,65) für den Schalterbetätigungsknopf (38) angeordnet sind, die vorzugsweise in einem Hohlraum (52) des Schalterbetätigungsknopfes (38) hineinragen.

13. Schalter nach wenigstens einem der Ansprüche 9 bis 12, dadurch gekennzeichnet, daß der Schalterbetätigungsknopf (38) axial verstellbar ist und daß die Aussparung (54) nur in einer bestimmten axialen Schaltstellung des Schalterbetätigungsknopfes (38) freiliegt.

14. Schalter nach wenigstens einem der vorherigen Ansprüche 4 bis 12, dadurch gekennzeichnet, daß zwischen dem Schalterbetätigungsknopf (38) und der Schaltachse (23) ein federndes Element (39) angeordnet ist, das nach dem Lösen oder Lockern des Schalterbetätigungsknopfes (38) den Schalterbetätigungsknopf (38) von der Schaltachse (23) abhebt.

15. Schalter nach wenigstens einem der vorhergehenden Ansprüche, dadurch gekennzeichnet, daß die Randkontur (55) der Frontplatte (12) der Kontur (56) der Öffnung (40) in der Montageplatte (41) entspricht.

16. Schalter nach wenigstens einem der vorhergehenden Ansprüche, dadurch gekennzeichnet, daß an wenigstens einer Seitenwand (13,15,16) wenigstens ein Federlappen (58,59) angeordnet ist, welcher quer zur Längsrichtung der Rastfeder (42) verläuft und an einer Begrenzungswand (60) der Öffnung (40) in der Montageplatte (41) unter Vorspannung anliegt.

17. Schalter nach Anspruch 16, dadurch gekennzeichnet, daß die Seitenwand (15) im Bereich des Federlappens (58,59) fluchtend mit der Randkontur (55) der Frontplatte (12) verläuft.

18. Schalter nach Anspruch 16 oder 17, dadurch gekennzeichnet, daß der Federlappen (58,59) derart im Bereich eines Durchbruches (57) der Seitenwand (15) angeordnet ist, daß die Wandstärke der Seitenwand (15) in die Wandstärke des Federlappens (58,59) eingeht.

## Claims

1. A switch, especially for motor vehicles, comprising a housing which is is limited by a front plate (12), several side walls (13, 14, 15, 16) and a base plate (19), which housing (10) is insertable into an opening (40) of a mounting plate (41), whereby a locking spring (42, 43) projects laterally from at least one side wall towards the front plate (12), which locking spring snaps behind the mounting plate (41) with a stud (44, 45) during the assembly of the switch and possesses a release shank (47, 48) ending in the area of the front plate (12), characterized in that the release shank (47, 48) extends through the interior of the housing (46) and ends in the area of an aperture (49, 50) provided in the front plate (12).

2. A switch according to claim 1, characterized in that the aperture (49, 50) in the front plate (12) is covered by a switch control button (38) at least from one direction of view.

3. A switch according to claim 2, characterized in that the switch control button (38) permits access to the aperture (49, 50) only in one of several positions.

4. A switch according to claim 2 or 3, characterized in that the switch control button (38) is detachably fixed on its switch shaft (23).

5. A switch according to claim 4, characterized in that the switch control button (38) is detachably fixed on the switch shaft (23) via fastening means (22a, 37), in particular locking means, and that the said fastening means (22a, 37) are only accessible in one of several positions of the switch control button (38).

6. A switch according to any one of the preceding claims, characterized in that the release shank (47, 48) of the locking spring (42, 43) penetrates the aperture in the front plate (12) and projects from the said front plate (12).

7. A switch according to claim 6, characterized in that the switch control button (38) rests upon the front plate (12) with little play at least in one of its switching positions and that the release shank (47, 48) projects into a hollow space (52) of the switch control button (38).

8. A switch according to claim 7, characterized in that the switch control button (38) is swivellable into several switching positions and has a tube-shaped portion (51), which in the switching positions surrounds the aperture (49, 50) and the release shank (49, 50) projecting from the aperture (49, 50).

9. A switch according to claims 5 and 8, characterized in that the fastening means (37) are arranged between the switch control button (38) and the switch shaft (23) in the area of the tube-shaped portion (51) of the switch control button (38), that the switch control button (38) with its tube-shaped portion (51) is arranged in a cavity (53) of the front plate (12) and has a recess (54) in its tube-shaped portion (51), through which recess the fastening means (37) are accessible in one switching position.

10. A switch according to claim 9, characterized in that the cavity (53) does not surround the entire circumference of the tube-shaped portion (51).

11. A switch according to claim 10, characterized in that the switch control button (38) is only swivellable about an angle the size of which is adapted to the size of the extent of the uncovered part of the tube-shaped portion (51).

12. A switch according to claim 11, characterized in that on the front plate (12) there are arranged stops (62, 63, 64, 65) for the switch control button (38), which stops preferably project into a hollow space (52) of the switch control button (38).

13. A switch according to any one of claims 9 to 12, characterized in that the switch control button (38) is axially adjustable and that the recess (54) is only bare in a particular axial switching position of the switch control button (38).

14. A switch according to any one of claims 4 to 12, characterized in that between the switch control button (38) and the switch shaft (23) a resilient element (39) is arranged, which resilient element is lifted from the switch shaft (23) after the switch control button (38) has been detached or loosened.

15. A switch according to any one of the preceding claims, characterized in that the rim contour (55) of the front plate (12) corresponds to the contour (56) of the opening (40) in the mounting plate (41).

**16.** A switch according to any one of the preceding claims, characterized in that at least one resilient lug (58, 59) is arranged on at least one side wall (13, 15, 16), which lug extends transversely to the logitudinal direction of the locking spring (42) and rests under prestress against a limiting wall (60) of the opening (40) in the mounting plate (41).

**17.** A switch according to claim 16, characterized in that the side wall (15) in the area of the resilient lug (58, 59) is flush with the rim contour (55) of the front plate (12).

**18.** A switch according to claim 16 or 17, characterized in that the resilient lug (58, 59) is arranged in the area of an aperture (57) of the side wall (15) in such a way that the wall thickness of the side wall (15) is added to the wall thickness of the resilient lug (58, 59).

## Revendications

**1.** Interrupteur, notamment pour véhicules automobiles, comportant un boîtier (10), qui est limité par une plaque avant (12), plusieurs parois latérales (13,14,15,16) et une plaque de base (19) et peut être inséré dans une ouverture (40) d'une plaque de montage (41), et dans lequel sur au moins une paroi latérale (15,16) fait saillie latéralement un ressort d'encliquetage (42,43), qui est dirigé vers la plaque avant (12), s'encliquette par un appendice saillant (44, 45) derrière la plaque de montage (41) lors du montage de l'interrupteur, et possède une branche de libération (47,48) qui se termine au voisinage de la plaque avant (12), caractérisé en ce que la branche de libération (47,48) traverse l'espace intérieur (46) du boîtier et se termine au voisinage d'un passage (49,50) ménagé dans la plaque avant (12).

**2.** Interrupteur selon la revendication 1, caractérisé en ce que le passage (49, 50) ménagé dans la plaque avant (12) est masqué par un bouton (38) d'actionnement de l'interrupteur au moins d'une direction de regard.

**3.** Interrupteur selon la revendication 2, caractérisé en ce que le bouton (38) d'actionnement de l'interrupteur libère le passage (49,50) uniquement dans l'une de plusieurs positions.

**4.** Interrupteur selon la revendication 2 ou 3, caractérisé en ce que le bouton (38) d'actionnement de l'interrupteur est fixé de façon amovible sur son axe de commutation (23).

**5.** Interrupteur selon la revendication 4, caractérisé en ce que le bouton (38) d'actionnement de l'interrupteur est fixé de façon amovible sur l'axe de commutation (23) par l'intermédiaire de moyens de fixation (22a,37), notamment de moyens d'encliquetage, et que ces moyens de fixation (22a,37) sont accessibles uniquement lorsque le bouton (38) d'actionnement de l'interrupteur est dans l'une de plusieurs positions.

**6.** Interrupteur selon au moins l'une des revendications précédentes, caractérisé en ce que la branche de libération (47,48) du ressort d'encliquetage (42,43) traverse le passage (49,50) ménagé dans la plaque avant (12) et sort de la plaque avant (12).

**7.** Interrupteur selon la revendication 6, caractérisé en ce que, dans l'une de ses positions de commutation, le bouton (38) d'actionnement de l'interrupteur s'applique avec un faible jeu sur la plaque avant (12) et que la branche de libération (47,48) pénètre dans une cavité (52) du bouton (38) d'actionnement de l'interrupteur.

**8.** Interrupteur selon la revendication 7, caractérisé en ce que le bouton (38) d'actionnement de l'interrupteur peut être amené par pivotement dans plusieurs positions de commutation et possède une section tubulaire (51), qui, dans les positions de commutation, entoure le passage (49,50) et la branche de libération (47,48) qui ressort du passage (49,50).

**9.** Interrupteur selon les revendications 5 et 8, caractérisé en ce que les moyens de fixation (37) entre le bouton (38) d'actionnement de l'interrupteur et l'axe de commutation (23) sont disposés au voisinage de la section tubulaire (51) du bouton (38) d'actionnement de l'interrupteur et que ce bouton (38) d'actionnement de l'interrupteur est disposé, par sa section tubulaire (52), dans un renfoncement (53) de la plaque avant (12) et possède, dans sa section tubulaire (51), un évidement (54) à l'aide duquel les moyens de fixation (37) sont accessibles, dans une position de commutation.

**10.** Interrupteur selon la revendication 9, caractérisé en ce que le renfoncement (53) n'entoure pas sur tout son pourtour la section tubulaire (51).

**11.** Interrupteur selon la revendication 10, caractérisé en ce que le bouton (38) d'actionnement de l'interrupteur peut pivoter seulement sur un angle dont la valeur est réglée sur celle de la dilatation de la partie non recouverte de la section tubulaire (51).

12. Interrupteur selon la revendication 11, caractérisé en ce que sur la plaque avant (12) sont disposées des butées (62,63,64,65) pour le bouton (38) d'actionnement de l'interrupteur, qui pénètre de préférence dans une cavité (52) du bouton (38) d'actionnement de l'interrupteur.

13. Interrupteur selon au moins l'une des revendications 9 à 12, caractérisé en ce que le bouton (38) d'actionnement de l'interrupteur est déplaçable axialement et que l'évidement (54) est libéré uniquement lorsque le bouton (38) d'actionnement de l'interrupteur est dans une position axiale de commutation déterminée.

14. Interrupteur selon au moins l'une des revendications précédentes 4 à 12, caractérisé en ce que le bouton (38) d'actionnement de l'interrupteur et l'axe de commutation (23) est disposé un élément élastique (39), qui, après desserrage ou déblocage du bouton (38) d'actionnement de l'interrupteur, écarte le bouton (38) d'actionnement de l'interrupteur, de l'axe de commutation (23).

15. Interrupteur selon au moins l'une des revendications précédentes, caractérisé en ce que le contour marginal (55) de la plaque avant (12) correspond au contour (56) de l'ouverture (40) ménagée dans la plaque de montage (41).

16. Interrupteur selon au moins l'une des revendications précédentes, caractérisé en ce que sur au moins une paroi latérale (13,15,16) est disposée au moins une languette élastique (58,59), qui s'étend transversalement par rapport à la direction longitudinale du ressort d'encliquetage (42) et s'applique sous précontrainte contre une paroi limite (60) de l'ouverture (40) dans la plaque de montage (41).

17. Interrupteur selon la revendication 16, caractérisé en ce que la paroi latérale (15) est alignée, dans la zone de la languette élastique (56,59), avec le contour marginal (55) de la plaque avant (12).

18. Interrupteur selon la revendication 16 ou 17, caractérisé en ce que la languette élastique (58,59) est disposée dans la zone d'un passage (57) ménagé dans la paroi latérale (15), de sorte que l'épaisseur de la paroi latérale (15) se poursuit par l'épaisseur de la languette

élastique (58,59).

Fig. 1

Fig. 2

Fig. 3

Fig. 4

Fig. 5